# EUROPÄISCHE PATENTANMELDUNG

(11) **EP 3 627 434 A1**
(43) Veröffentlichungstag der Anmeldung: **25.03.2020**
(21) Anmeldenummer: 18196164.0
(22) Anmeldetag: 24.09.2018
(51) Int. Cl.: G06Q 50/06, G06Q 30/06

(54) **SYSTEM, VERFAHREN UND VORRICHTUNG ZUR DURCHFÜHRUNG VON KRYPTOGRAPHISCH GESICHERTEN TRANSAKTIONEN**

(71) Anmelder: Youki GmbH, 93055 Regensburg (DE)
(72) Erfinder: STOUSSAVLJEWITSCH, Martin, 92284 Poppenricht (DE); STOUSSAVLJEWITSCH, Michael, 92284 Poppenricht (DE)
(74) Vertreter: Wolf, Gerhard

(57) **Zusammenfassung**

Die Erfindung bezieht sich auf ein System zur Durchführung von Transaktionen zwischen zumindest einem ersten und zumindest einem zweiten Transaktionspartner umfassend
- mehrere Rechen- und Kommunikationseinheiten (2), die örtlich verteilt an mehreren Standorten vorgesehen sind, wobei jede Rechen- und Kommunikationseinheit (2) mit zumindest einem Messaufnehmer (3) gekoppelt ist, wobei die Rechen- und Kommunikationseinheiten (2) eine Rechnergruppe (4) zur Durchführung einer Transaktion bilden, wobei die Rechen- und Kommunikationseinheiten (2) einer Rechnergruppe (4) bei der Durchführung einer Transaktion jeweils zur Generierung eines Datensatzes ausgebildet sind, der Informationen hinsichtlich einer Transaktion enthält und zur Einbindung in eine Kette von kryptographisch miteinander verknüpften Datensätzen ausgebildet ist;
- zumindest eine Validierungseinheit (5), die zur Überprüfung der in die Kette von kryptographisch miteinander verknüpften Datensätzen einzubindenden Datensätze ausgebildet ist, wobei die Validierungseinheit (5) weiterhin dazu ausgebildet ist, einen Datensatz, der von einer Rechen- und Kommunikationseinheiten (2) der Rechnergruppe (4) generiert wurde, auszuwählen und in die Kette von kryptographisch miteinander verknüpften Datensätzen einzubinden.

## Beschreibung

Die Erfindung betrifft ein System, ein Verfahren sowie eine Rechen- und Kommunikationseinheit zur Durchführung von kryptographisch gesicherten Transaktionen zwischen einem ersten und einem zweiten Transaktionspartner.

Systeme zur Durchführung von kryptographisch gesicherten Transaktionen sind aus dem Stand der Technik bereits bekannt. Insbesondere sind Kryptowährungssysteme bekannt, die auf einer Blockchain-Technologie beruhen. Dabei wird eine Transaktion durch einen Datensatz repräsentiert, wobei dieser Datensatz in eine Datensatzkette eingebunden wird und zwar derart, dass die Datensätze der Datensatzkette untereinander kryptographisch verknüpft sind. Diese kryptographische Verknüpfung wird vorzugsweise dadurch erreicht, dass der Datensatz zusätzlich zu den Transaktionsdaten auch einen kryptographisch sicheren Hash des vorhergehenden Blocks sowie vorzugsweise einen Zeitstempel enthält.

Die Sicherheit bei einer derartigen Blockchain-Technologie wird dadurch erreicht, dass aufgrund der kryptographische Verknüpfung der Datensätze untereinander und der für eine Verfälschung nötigen Rechenleistung eine Verfälschung eines einzelnen Datensatzes nicht möglich ist. Zur Verfälschung eines Datensatzes müsste zumindest ein Teil der Kette von dem verfälschten Datensatz bis zur Gegenwart neu berechnet werden, was aber aus Gründen der Rechenkapazität nahezu unmöglich und aus wirtschaftlichen Gründen nicht praktikabel ist.

Ausgehend hiervon ist es Aufgabe der Erfindung, ein System zur Durchführung von Transaktionen zwischen einem ersten und einem zweiten Transaktionspartner anzugeben, das bei Nutzung von begrenzten Hardwareressourcen eine kryptographisch sichere Durchführung von Transaktionen ermöglicht.

Die Aufgabe wird durch ein System gemäß den Merkmalen des unabhängigen Patentanspruchs 1 gelöst. Bevorzugte Ausführungsformen sind Gegenstand der Unteransprüche. Ein Verfahren zur Durchführung von Transaktionen zwischen einem ersten und einem zweiten Transaktionspartner ist Gegenstand des nebengeordneten Patentanspruchs 10 und eine Rechen- und Kommunikationseinheit zur Berechnung eines Datensatzes einer derartigen Transaktion ist Gegenstand des Patentanspruchs 15.

Gemäß einem ersten Aspekt bezieht sich die Erfindung auf ein System zur Durchführung von Transaktionen zwischen zumindest einem ersten und zumindest einem zweiten Transaktionspartner. Das System umfasst mehrere Rechen- und Kommunikationseinheiten, die örtlich verteilt an mehreren Standorten vorgesehen sind, wobei jede Rechen- und Kommunikationseinheit mit zumindest einem Messaufnehmer, beispielsweise einem Stromverbrauch-Messaufnehmer gekoppelt ist. Insbesondere ist jede Rechen- und Kommunikationseinheit Bestandteil eines sog. Smart-Meter-Gateways oder bildet ein solches Smart-Meter-Gateway. Die mehreren Rechen- und Kommunikationseinheiten bilden dabei eine Rechnergruppe zur Durchführung einer Transaktion. Die Rechen- und Kommunikationseinheiten einer Rechnergruppe sind bei der Durchführung einer Transaktion jeweils zur Generierung eines Datensatzes ausgebildet, der Informationen hinsichtlich einer Transaktion enthält und zur Einbindung in eine Kette von kryptographisch miteinander verknüpften Datensätzen (nachfolgend auch als Datensatzkette bezeichnet) ausgebildet ist. Beispielsweise kann der Datensatz zur Einbindung in eine sog. Blockchain ausgebildet sein, in der die Blöcke als Datensätze kryptographisch untereinander verknüpft sind. Die Rechen- und Kommunikationseinheiten der Rechnergruppe stehen insbesondere in Konkurrenz zueinander, d.h. mehrere Rechen- und Kommunikationseinheiten der Rechnergruppe, insbesondere jede Rechen- und Kommunikationseinheit der Rechnergruppe, berechnet unabhängig von den anderen einen Datensatz, der die durchzuführende Transaktion abbildet und versucht, dass der von ihr berechnete Datensatz in die Kette von kryptographisch miteinander verknüpften Datensätzen eingebunden wird, um die Transaktion zu dokumentieren. Vorzugsweise erhält diejenige Rechen- und Kommunikationseinheit eine Vergütung, deren Datensatz in die Datensatzkette eingebunden wird.

Des Weiteren umfasst das System zumindest eine Validierungseinheit, die zur Überprüfung der in die Kette von kryptographisch miteinander verknüpften Datensätzen einzubindenden Datensätze ausgebildet ist. In anderen Worten prüft die Validierungseinheit damit, ob ein Datensatz, der in die Kette von kryptographisch miteinander verknüpften Datensätzen eingefügt werden soll, korrekt (korrekt im Sinne bestehender Regeln und ohne Verfälschung) gebildet wurde und sich damit für ein Einbinden in die Kette von kryptographisch miteinander verknüpften Datensätzen eignet. Die Validierungseinheit ist weiterhin dazu ausgebildet, einen Datensatz, der von einer Rechen- und Kommunikationseinheiten der Rechnergruppe generiert wurde, auszuwählen und in die Kette von kryptographisch miteinander verknüpften Datensätzen einzubinden. Damit entscheidet die Validierungseinheit, welcher Datensatz der durch die untereinander konkurrierenden Rechen- und Kommunikationseinheiten berechneten Datensätze in die Kette von kryptographisch miteinander verknüpften Datensätzen eingebunden wird.

Vorzugsweise wird der Datensatz von der Rechen- und Kommunikationseinheit verschlüsselt, um diesen bei der Übertragung zu der Validierungseinheit zu schützen. Insbesondere wird der Datensatz beispielsweise mit einem privaten Schlüssel der jeweiligen Rechen- und Kommunikationseinheit verschlüsselt.

Das erfindungsgemäße System bietet den entscheidenden Vorteil, dass durch den Einsatz einer Validierungseinheit die Anzahl der Rechen- und Kommunikationseinheiten in einer Rechnergruppe begrenzt gehalten werden kann, beispielsweise kleiner als 200 Rechen- und Kommunikationseinheiten, ohne dadurch die Authentizität der Kette von kryptographisch miteinander verknüpften Datensätzen zu gefährden, da durch die Validierungseinheit überprüft bzw. sichergestellt wird, dass die von den Rechen- und Kommunikationseinheiten berechneten Datensätze korrekt gebildet sind. Zudem bilden die Rechen- und Kommunikationseinheiten als Einheiten, die Bestandteil einer Messaufnehmer-Architektur sind, eine hochgradige Authentizität, da diese Rechen- und Kommunikationseinheiten vorzugsweise zertifiziert sind und lediglich über einen speziell gesicherten Zugang auf diese zugegriffen werden kann.

Für den Fall, dass die Rechen- und Kommunikationseinheit Bestandteil eines Smart-Meter-Gateways ist bzw. ein solches Smart-Meter-Gateway bildet, sei auf die technische Richtlinie des Bundesamts für Sicherheit in der Informationstechnik (BSI) TR-03109-1, Version 1.0 zu diesem Smart-Meter-Gateway verwiesen, die vollumfänglich zum Gegenstand der vorliegenden Offenbarung gemacht wird.

Gemäß einem Ausführungsbeispiel sind die Transaktionspartner unterschiedlichen Zonen zugeordnet, wobei jeder Zone zumindest eine Validierungseinheit zugeordnet ist. Den Zonen der Transaktionspartner können dabei gleiche oder aber auch zumindest teilweise unterschiedliche Validierungseinheiten zugeordnet sein. Jeder Zone können mehrere Rechen- und Kommunikationseinheiten zugeordnet sein, d.h. die Rechen- und Kommunikationseinheiten sind über die jeweiligen Zonen auch den jeweiligen Transaktionspartnern zugeordnet. Vorzugsweise sind den jeweiligen Transaktionspartnern dabei jeweils unterschiedliche Rechen- und Kommunikationseinheiten zugeordnet. Damit lässt sich durch die Zonen eine zumindest teilweise physikalische Trennung zwischen den Rechen- und Kommunikationseinheiten, die die jeweiligen Datensätze berechnen, erreichen.

Gemäß einem Ausführungsbeispiel sind die Transaktionspartner unterschiedlichen Zonen zugeordnet, wobei jeder Zone zumindest zwei Validierungseinheiten zugeordnet sind, wobei eine erste Validierungseinheit zur Überprüfung der in die Kette von kryptographisch miteinander verknüpften Datensätzen einzubindenden Datensätze ausgebildet ist und wobei die zumindest eine weitere Validierungseinheit zur Kontrolle der ersten Validierungseinheit ausgebildet ist. Vorzugsweise sind jeder Zone mehr als zwei Validierungseinheiten zugeordnet, wobei eine der Validierungseinheiten als erste Validierungseinheit dazu konfiguriert ist, einen einzubindenden Datensatz zu überprüfen und die weiteren Validierungseinheiten diese erste Validierungseinheit überprüfen. Damit kann eine hohe Authentizität des Systems sichergestellt werden.

Vorzugsweise stehen die Validierungseinheiten, die einer jeweiligen Zone zugeordnet sind, in Konkurrenz zueinander. D.h. sämtliche Validierungseinheiten bewerben sich jeweils darum, die Überprüfung des in die Kette von kryptographisch miteinander verknüpften Datensätzen einzubindenden Datensatzes vornehmen zu dürfen. Vorzugsweise ist die Überprüfung eines zu überprüfenden Datensatzes an eine Vergütung, insbesondere eine monetäre Vergütung gekoppelt und lediglich diejenige Validierungseinheit, die für die Überprüfung des einzubindenden Datensatzes ausgewählt wird, erhält dadurch eine Vergütung.

Gemäß einem Ausführungsbeispiel weist jede Rechen- und Kommunikationseinheit jeweils einen gekapselten Bereich auf, der entweder einen eigenständigen Prozessor und eine eigenständige Speichereinheit umfasst. Alternativ sind dem gekapselten Bereich eigenständige Prozessor- und Speicherbereiche zugewiesen, beispielsweise in Form von virtuellen Rechenumgebungen. Dieser gekapselte Bereich kann beispielsweise eine sog. "sandbox", d.h. einen isolierten Bereich, bilden. Dadurch kann sichergestellt werden, dass die Rechen- und Kommunikationseinheit lediglich auf bestimmte Ressourcen eines Messaufnehmers, insbesondere eines Smart-Meter-Gateway zugreifen kann und nicht auf andere Ressourcen, beispielsweise solche, die Stromverbrauchswerte berechnen bzw. abspeichern.

Gemäß einem Ausführungsbeispiel ist der eigenständige Prozessor oder der eigenständige Prozessorbereich zur Berechnung des Datensatzes konfiguriert. Damit wird durch einen Prozessor des Messaufnehmers unmittelbar der die Transaktion abbildende Datensatz berechnet. Der Datensatz kann dabei beispielsweise eine kryptographisch verschlüsselte Information eines in der Datensatz-Kette vorhergehenden, insbesondere unmittelbar vorherigen Datensatzes (beispielsweise einen Hashwert des gesamten Datensatzes oder eines Teils davon), die Transaktionsdaten und vorzugsweise einen Zeitstempel aufweisen, der angibt, zu welchem Zeitpunkt der Datensatz generiert wurde. Es versteht sich, dass dies lediglich ein Beispiel für den Aufbau eines Datensatzes ist und dieser ggf. weitere Informationen oder ggf. weniger Informationen enthalten kann. Gemäß einem Ausführungsbeispiel ist die eigenständige Speichereinheit oder der eigenständige Speicherbereich zur Abspeicherung einer Kette von kryptographisch miteinander verknüpften Datensätzen ausgebildet. Dabei kann die eigenständige Speichereinheit bzw. der eigenständige Speicherbereich entweder die komplette Datensatzkette oder einen Teil der Datensatzkette speichern. Dadurch wird in dem Messaufnehmer bzw. dem Smart-Meter-Gateway nicht nur der neu einzubindende Datensatz berechnet, sondern auch die Datensatzkette darin gespeichert.

Gemäß einem Ausführungsbeispiel ist die zumindest eine Validierungseinheit aufgrund eines eingesetzten Betrags eines Wertträgers oder eines Zahlungsmittels als Validierungseinheit autorisiert. In anderen Worten muss ein Betreiber einer Validierungseinheit einen Betrag eines Wertträgers oder eines Zahlungsmittels einsetzen, um sich - neben dessen technischer Eignung - als Validierungseinheit zu qualifizieren. Dieser eingesetzte Betrag eines Wertträgers oder eines Zahlungsmittels wird vorzugsweise als Pfand verwendet, um sicherzustellen, dass die Validierungseinheit eine korrekte Überprüfung der zu prüfenden Datensätze vornimmt. Vorzugsweise übersteigt der eingesetzte Betrag eines Wertträgers oder eines Zahlungsmittels die zu prüfenden Einzeltransaktionen um ein Vielfaches. Für den Fall, dass eine Validierungseinheit eine fehlerhafte Prüfung eines einzubindenden Datensatzes vornimmt, besteht für diese die Gefahr, den eingesetzten Betrag zu verlieren. Damit wird die Authentizität des Systems wesentlich gesteigert.

Gemäß einem Ausführungsbeispiel sind die Rechen- und Kommunikationseinheiten zur Durchführung der Transaktionen zwischen zumindest einem ersten und zumindest einem zweiten Transaktionspartner über eine Schnittstelle frei konfigurierbar. Beispielsweise kann über die Schnittstelle Software auf den Rechen- und Kommunikationseinheiten installiert werden oder es kann eine Anpassung bzw. eine Konfiguration der Software vorgenommen werden. Die Konfiguration kann dabei über eine Zugriffskontrolleinheit erfolgen, das den Zugang zu den Rechen- und Kommunikationseinheiten kontrolliert. Dadurch können die Rechen- und Kommunikationseinheiten für die von Ihnen zu bewerkstelligende Aufgabe konfiguriert werden.

Gemäß einem Ausführungsbeispiel ist jede Rechen- und Kommunikationseinheit zur parallelen Generierung eines Datensatzes ausgebildet und die Validierungseinheit ist basierend auf einem Konsensmechanismus unter Berücksichtigung der parallel generierten Datensätze dazu konfiguriert, zu entscheiden, welches Datenpaket in die Kette von kryptographisch miteinander verknüpften Datensätzen einzubinden ist. Dadurch kann beispielsweise über einen Mehrheitskonsens, bei dem davon ausgegangen wird, dass die Mehrheit von Rechen- und Kommunikationseinheiten eine korrekte Berechnung eines Datensatzes vornimmt und ggf. unter Hinzunahme weiterer Kriterien, entschieden werden, ob der Datensatz korrekt gebildet wurde und basierend darauf die Einbindung in die Datensatzkette vorgenommen werden.

Gemäß einem weiteren Aspekt betrifft die Erfindung ein Verfahren zur Durchführung von Transaktionen zwischen zumindest einem ersten und zumindest einem zweiten Transaktionspartner mittels einem System, das mehrere Rechen- und Kommunikationseinheiten, die örtlich verteilt an mehreren Standorten vorgesehen sind, umfasst. Jede Rechen- und Kommunikationseinheit ist mit zumindest einem Messaufnehmer gekoppelt. Die Rechen- und Kommunikationseinheiten bilden eine Rechnergruppe zur Durchführung einer Transaktion. Das Verfahren umfasst dabei die folgenden Schritte:
- Generierung jeweils zumindest eines Datensatzes durch die Rechen- und Kommunikationseinheiten der Rechnergruppe bei der Durchführung einer Transaktion, wobei der Datensatz Informationen hinsichtlich der Transaktion enthält und zur Einbindung in eine Kette von kryptographisch miteinander verknüpften Datensätzen ausgebildet ist;
- Überprüfung des in die Kette von kryptographisch miteinander verknüpften Datensätzen einzubindenden Datensatzes durch zumindest eine Validierungseinheit;
- Auswählen eines Datensatzes, der von einer Rechen- und Kommunikationseinheit der Rechnergruppe generiert wurde, und Einbinden des ausgewählten Datensatzes in die Kette von kryptographisch miteinander verknüpften Datensätzen.

Gemäß eines Ausführungsbeispiels des Verfahrens beinhaltet der Schritt des Überprüfens des in die Kette von kryptographisch miteinander verknüpften Datensätzen einzubindenden Datensatzes, dass die Validierungseinheit basierend auf einem Konsensmechanismus unter Berücksichtigung der parallel generierten Datensätze entscheidet, welches Datenpaket in die Kette von kryptographisch miteinander verknüpften Datensätzen einzubinden ist. Dadurch kann beispielsweise über einen Mehrheitskonsens, bei dem davon ausgegangen wird, dass die Mehrheit von Rechen- und Kommunikationseinheiten eine korrekte Berechnung eines Datensatzes vornimmt und ggf. unter Hinzunahme weiterer Kriterien, entschieden werden, ob der Datensatz korrekt gebildet wurde und basierend darauf die Einbindung in die Datensatzkette vorgenommen werden.

Gemäß eines Ausführungsbeispiels des Verfahrens wird die Validierungseinheit durch zumindest eine weitere Validierungseinheit überprüft und bei fehlerhafter Validierung verliert die Validierungseinheit einen eingesetzten Betrag eines Wertträgers oder eines Zahlungsmittels, der für die Autorisierung als Validierungseinheit eingesetzt wurde. Vorzugsweise übersteigt der eingesetzte Betrag eines Wertträgers oder eines Zahlungsmittels den Wert der zu prüfenden Einzeltransaktionen um ein Vielfaches. Damit wird die Authentizität des Systems bei einer begrenzten Anzahl von Rechen- und Kommunikationseinheiten in der Rechnergruppe wesentlich gesteigert.

Gemäß eines Ausführungsbeispiels des Verfahrens umfasst das Einbinden des ausgewählten Datensatzes in die Kette von kryptographisch miteinander verknüpften Datensätzen das Generieren eines kryptographisch gesicherten Hash-Werts zumindest eines Teils des in der Kette von Datensätzen unmittelbar davor befindlichen Datensatzes, eines Zeitstempels und Informationen zur durchgeführten Transaktion. Dadurch kann eine Verknüpfung der Datensätze innerhalb der Datensatzkette erreicht werden, die zu einer wesentlichen Steigerung der Authentizität des Verfahrens führt.

Gemäß einem Ausführungsbeispiel des Verfahrens weist die Rechen- und Kommunikationseinheit jeweils einen gekapselten Bereich auf, der entweder einen eigenständigen Prozessor und eine eigenständige Speichereinheit umfasst, oder dem gekapselten Bereich werden eigenständige Prozessor- und Speicherbereiche zugewiesen. In der eigenständigen Speichereinheit oder dem eigenständigen Speicherbereich der Rechen- und Kommunikationseinheit wird eine Kette von kryptographisch miteinander verknüpften Datensätzen abgespeichert. Dadurch kann der Messaufnehmer bzw. das Smart-Meter-Gateway sowohl zur Berechnung des einzubindenden Datensatzes als auch zur Abspeicherung der Datensatzkette verwendet werden.

Unter "Transaktion " im Sinne der vorliegenden Erfindung wird jeglicher Vorgang verstanden, bei dem ein zwischen Transaktionspartnern ausgetauschter Wert dokumentiert wird. Dies kann insbesondere ein Betrag eines Wertträgers oder eines Zahlungsmittels, ein energetischer Messwert, beispielsweise ein Energieverbrauchswert oder ein Energielieferwert etc. sein.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: beispielhaft eine schematische Darstellung einer Anordnung einer mit einem Messaufnehmer gekoppelten Rechen- und Kommunikationseinheit;
- Fig. 2: beispielhaft eine schematische Darstellung eines Systems umfassend mehrere mit Messaufnehmern gekoppelte Rechen- und Kommunikationseinheiten, die über eine Zugriffskontrolleinheit mit mehreren Validierungseinheiten verbunden sind; und
- Fig. 3: beispielhaft ein Blockschaltbild eines Systems zur Durchführung von Transaktionen zwischen mehreren Transaktionspartnern, denen in Zonen angeordnete Rechnergruppen bzw. Validierungseinheiten zugeordnet sind.

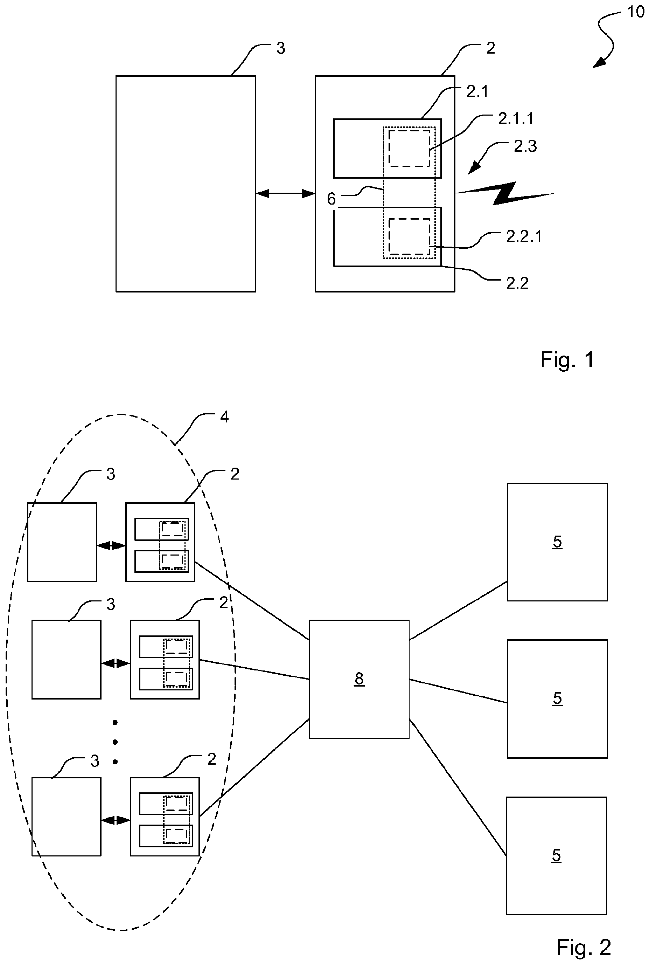

In Figur 1 ist beispielhaft und grob schematisch eine mit einem Messaufnehmer 3 gekoppelte Rechen- und Kommunikationseinheit 2 gezeigt. Die Rechen- und Kommunikationseinheit 2 ist beispielsweise ein sog. Smart-Meter-Gateway, das Messdaten von dem Messaufnehmer 3, beispielsweise einem Stromzähler empfängt, diese speichert und ggf. aufbereitet, um die Messdaten oder davon abgeleitete Informationen (beispielsweise durch vorgenannte Aufbereitung) an einen Informationsempfänger weiterzuleiten. Derartige Informationsempfänger können beispielsweise eine Abrechnungsstelle, ein Versorgungsunternehmen etc. sein. Somit bildet die Rechen- und Kommunikationseinheit 2 quasi eine Art Gateway für die Kommunikation des Messaufnehmers 3 nach außen.

Die Rechen- und Kommunikationseinheit 2 ist vorzugsweise in unmittelbarer örtlicher Nähe zu dem Messaufnehmer 3 angeordnet. Die Rechen- und Kommunikationseinheit 2 kann beispielsweise in einer Verbrauchsstelle, insbesondere einem Gebäude vorgesehen sein, in dem sich auch der Messaufnehmer 3 befindet.

Die Rechen- und Kommunikationseinheit 2 weist zumindest einen Prozessor 2.1 zur Durchführung von Rechenoperationen und eine Speichereinheit 2.2 für die Abspeicherung von Daten auf.

Für die Durchführung von Transaktionen zwischen zumindest zwei Transaktionspartnern und die dafür notwendige Berechnung von Datensätzen ist ein gekapselter Bereich 6 vorgesehen, der in Figur 1 durch ein punktiert gezeichnetes Rechteck dargestellt ist. Dieser gekapselte Bereich 6 bildet eine sog. "sandbox", d.h. einen isolierten Bereich, so dass die Rechen- und Speicherprozesse in diesem gekapselten Bereich 6 keine Auswirkungen auf die übrige Prozesse (beispielsweise Erfassung und Auswertung von Messdaten) haben, die außerhalb des gekapselten Bereichs 6 durch die Rechen- und Kommunikationseinheit 2 abgearbeitet werden.

Dem gekapselten Bereich 6 können insbesondere ein Prozessorbereich 2.1.1 des Prozessors 2.1 und ein Speicherbereich 2.2.1 der Speichereinheit 2.2 zugewiesen sein, so dass der gekapselte Bereich 6 grundsätzlich auf die gleiche Hardware zugreift, die auch für die übrigen in der Rechen- und Kommunikationseinheit 2 verarbeiteten Prozesse (beispielsweise Erfassung und Auswertung von Messdaten) verwendet werden. Jedoch wird eine virtuelle Trennung dadurch erreicht, dass dem gekapselten Bereich 6 ein anderer Prozessorbereich 2.1.1 (beispielsweise ein Prozessorkern eines Mehrkernprozessors) und ein anderer Speicherbereich 2.2.1 (andere Speicheradressen) zugewiesen sind als den übrigen in der Rechen- und Kommunikationseinheit 2 verarbeiteten Prozessen. In anderen Worten wird demnach eine virtuelle Kapselung für die Prozesse zur Transaktionsdurchführung erreicht.

Alternativ kann der gekapselte Bereich 6 einen eigenen Prozessor und eine eigene Speichereinheit aufweisen, auf die die übrigen in der Rechen- und Kommunikationseinheit 2 verarbeiteten Prozesse (beispielsweise Erfassung und Auswertung von Messdaten) keinen Zugriff haben, so dass anstelle einer virtuellen Trennung eine physische Trennung erreicht wird. Der gekapselte Bereich 6 kann, abhängig von der Konfiguration der Rechen- und Kommunikationseinheit 2 auch Messdaten oder von Messdaten abgeleitete Informationen empfangen. Dies kann beispielsweise über einen internen Datenaustausch in der Rechen- und Kommunikationseinheit 2 zwischen dem gekapselten Bereich 6 und einem vom gekapselten Bereich 6 virtuell oder physisch getrennten Bereich erfolgen. Ein direkter Zugriff auf Speicherbereiche, in denen die Messdaten oder von Messdaten abgeleitete Informationen gespeichert sind, ist aus dem gekapselten Bereich 6 heraus vorzugsweise nicht möglich.

Des Weiteren weist die Rechen- und Kommunikationseinheit 2 eine Kommunikationsschnittstelle 2.3 auf, über die - wie nachfolgend eingehender erläutert - durch die Rechen- und Kommunikationseinheit 2 Daten versendet und empfangen werden können.

Die Rechen- und Kommunikationseinheit 2 ist dazu konfiguriert, einen oder mehrere Datensätze zu berechnen, die Informationen hinsichtlich einer Transaktion enthalten. Ein Datensatz ist insbesondere ein Datenblock, der in eine Kette von Datensätzen eingebunden werden soll, und zwar derart, dass die Datensätze untereinander kryptographisch verkettet sind, um die Authentizität der Kette von Datensätzen zu gewährleisten.

Ein Datensatz kann beispielsweise eine kryptographisch verschlüsselte Information eines in der Datensatz-Kette vorhergehenden, insbesondere unmittelbar vorherigen Datensatzes (beispielsweise einen Hashwert des gesamten Datensatzes oder eines Teils davon), die Transaktionsdaten und vorzugsweise einen Zeitstempel aufweisen, der angibt, zu welchem Zeitpunkt der Datensatz generiert wurde.

Zur Erzeugung de Zeitstempels kann die Rechen- und Kommunikationseinheit 2 einen Zugriff auf eine Uhr haben. Dies kann insbesondere eine Atomuhr sein, so dass die Rechen- und Kommunikationseinheit 2 beispielsweise einen Zeitstempel basierend auf der Internationalen Atomzeit (TAI) generieren kann. Dadurch wird eine hochgenaue zeitliche Kennzeichnung der Datensätze ermöglicht.

Fig. 2 zeigt ein System 1, das zur Durchführung von Transaktionen zwischen zumindest zwei Transaktionspartnern ausgebildet ist.

Das System 1 umfasst mehrere Rechen- und Kommunikationseinheiten 2 die jeweils mit zumindest einem Messaufnehmer 2 gekoppelt sind. Die Rechen- und Kommunikationseinheiten 2 bilden eine Rechnergruppe 4, die beispielsweise einem Transaktionspartner zugewiesen sind. Der Transaktionspartner kann beispielsweise zeitlich begrenzt Systemressourcen in einem Netzwerk einer Vielzahl von Rechen- und Kommunikationseinheiten 2 buchen, so dass der Transaktionspartner durch die gebuchten Systemressourcen Transaktionen mit einem weiteren Transaktionspartner vollziehen kann. Eine Transaktion kann beispielsweise ein Zahlungsvorgang, eine Bürgschaftshinterlegung, ein Abrechnungsvorgang o.ä. sein.

Die Rechen- und Kommunikationseinheiten 2 sind über eine oder mehrere Zugriffskontrolleinheiten 8 mit einer oder mehreren Validierungseinheiten 5 durch eine Kommunikationsverbindung gekoppelt. Hierbei können sämtliche Rechen- und Kommunikationseinheiten 2 einer Rechnergruppe 4 über eine einzige Zugriffskontrolleinheit 8 mit den Validierungseinheiten 5 gekoppelt sein oder Rechen- und Kommunikationseinheiten 2 sind zumindest teilweise über unterschiedliche Zugriffskontrolleinheiten 8 mit den Validierungseinheiten 5 gekoppelt.

Die zumindest eine Zugriffskontrolleinheit 8 ist dazu ausgebildet, den Zugriff auf die Rechen- und Kommunikationseinheiten 2 zu steuern bzw. zu kontrollieren. Dadurch wird sichergestellt, dass lediglich autorisierte Programme, Prozesse bzw. Nutzer auf die Rechen- und Kommunikationseinheiten 2 zugreifen können. Zudem wird über die Zugriffskontrolleinheit 8 der Zugriff auf Ressourcen des gekapselten Bereichs 6 geregelt. Die zumindest eine Zugriffskontrolleinheit 8 bildet damit quasi ein Gateway für den Zugriff auf die von den Rechen- und Kommunikationseinheiten 2 bereitgestellten Ressourcen.

Das System 1 umfasst des Weiteren zumindest eine, vorzugsweise mehrere Validierungseinheiten 5. Insbesondere sind zwei oder mehr Validierungseinheiten 5 einer Rechnergruppe 4 zugeordnet.

Nach Empfang von Informationen hinsichtlich einer durchzuführenden Transaktion wird durch den gekapselten Bereich der Rechen- und Kommunikationseinheiten 2 der Rechnergruppe 4, die einem Transaktionspartner zugeordnet ist, jeweils ein Datensatz berechnet. Wie zuvor bereits dargelegt, enthält ein Datensatz vorzugsweise einen kryptographisch sichere Verknüpfung zu einem in der Datensatzkette vorhergehenden, insbesondere unmittelbar vorhergehenden Datensatz sowie Informationen zur Transaktion. Vorzugsweise ist in dem Datensatz auch ein Zeitstempel vorgesehen. Die Rechen- und Kommunikationseinheiten 2 berechnen vorzugsweise parallel oder quasiparallel jeweils einen die Transaktion wiederspiegelnden Datensatz.

Nach der Berechnung schicken die Rechen- und Kommunikationseinheiten 2 der Rechnergruppe 4 jeweils den von Ihnen zu der Transaktion berechneten Datensatz über die Zugriffskontrolleinheit 8 an eine oder mehrere Validierungseinheiten 5. Dabei ist der Datensatz vorzugsweise verschlüsselt, beispielsweise mit einem privaten Schlüssel eines asymmetrischen Verschlüsselungsverfahrens. Zumindest eine der Validierungseinheiten 5 prüft die von unterschiedlichen Rechen- und Kommunikationseinheiten 2 der Rechnergruppe 4 bereitgestellten Datensätze und entscheidet dann, welcher Datensatz an die Kette von Datensätzen eingebracht wird.

Bei der Prüfung der Datensätze nutzt die Validierungseinheit 5 vorzugsweise einen Konsensmechanismus, d.h. basierend auf mehreren Datensätzen, die zu dieser Transaktion von den Rechen- und Kommunikationseinheiten 2 berechnet wurden, entscheidet die Validierungseinheit 5, ob ein bestimmter Datensatz korrekt gebildet wurde und damit in die Kette von Datensätzen eingefügt werden kann. Diese Technologie ist auch als blockchain-Technologie bekannt.

Im Falle mehrerer Validierungseinheiten 5, d.h. zumindest einer ersten Validierungseinheit 5, die die Prüfung der Datensätze vornimmt, und zumindest einer weiteren Validierungseinheit 5 übernimmt die zumindest eine weitere Validierungseinheit 5 eine Kontrollfunktion für die erste Validierungseinheit 5. Dabei prüft die zumindest eine weitere Validierungseinheit 5, ob die erste Validierungseinheit 5 den einzubindenden Datensatz korrekt prüft und diesen korrekt geprüften Datensatz dann korrekt in die Datensatzkette einbindet.

Um sich als Validierungseinheit 5 zu qualifizieren, muss diese bzw. deren Betreiber einen Betrag eines Wertträgers bzw. Zahlungsmittels, beispielsweise einen Geldbetrag als Einsatz hinterlegen. Dieser Einsatz übersteigt vorzugsweise den Wert einer durchzuführenden Transaktion um ein Vielfaches. Für den Fall, dass die zumindest eine weitere Validierungseinheit 5 feststellt, dass die erste Validierungseinheit 5 einen oder mehrere Datensätze nicht korrekt prüft bzw. nicht korrekt einbindet, kann dieser die Eignung als Validierungseinheit 5 entzogen werden und der hinterlegte Einsatz kann einbehalten werden. Damit kann auch bei einer begrenzten Anzahl von Rechen- und Kommunikationseinheiten 2, die zudem eine begrenzte Rechenleistung aufweisen, eine hohe Authentizität und Integrität der in die Datensatzkette eingebundenen Datensätze erreicht werden.

Vorzugsweise sind die Rechen- und Kommunikationseinheiten 2 der Rechnergruppe 4 dazu ausgebildet, zumindest Abschnitte der Kette von Datensätzen zu speichern. Dadurch wird eine verteilte Speicherung der Datensatzketten in mehreren Rechen- und Kommunikationseinheiten 2 erreicht, so dass selbst beim Ausfall einer Rechen- und Kommunikationseinheit 2 eine hinreichende Datensicherheit gewährleistet ist.

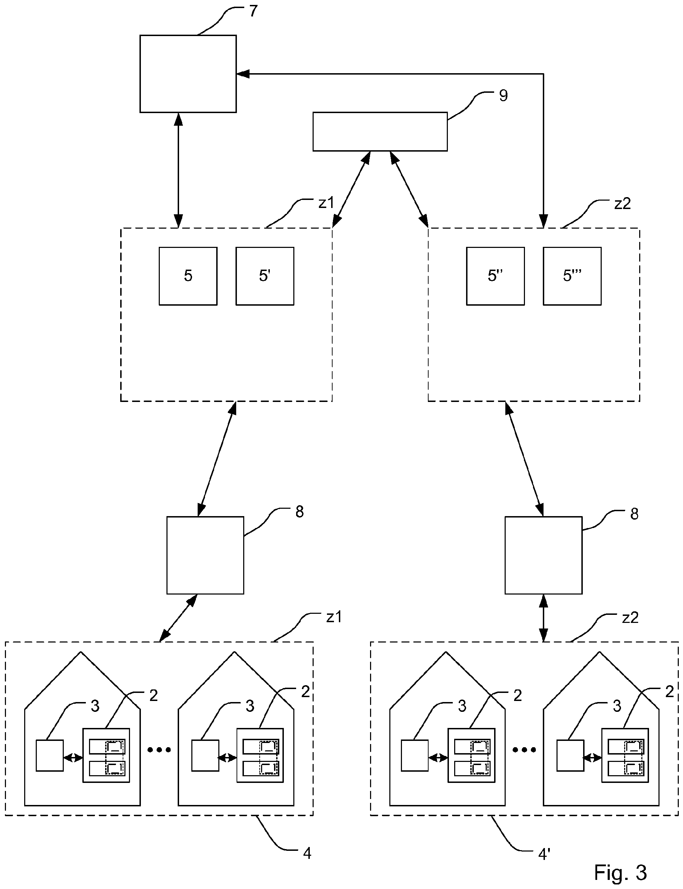

Fig. 3 zeigt ein Blockschaubild, das die funktionalen Zusammenhänge des zuvor beschriebenen Systems bzw. eines Verfahrens zur Durchführung von Transaktionen zwischen zumindest zwei oder mehr Transaktionspartnern veranschaulicht.

Den Transaktionspartnern ist jeweils eine Zone z1, z2 und jeweils eine Rechnergruppe 4, 4' zugeordnet, wobei jede Rechnergruppe 4, 4' jeweils mehrere Rechen- und Kommunikationseinheiten 2 umfasst. Die Rechen- und Kommunikationseinheiten 2 einer Rechnergruppe 4 sind, wie zuvor bereits beschrieben, zur Berechnung eines oder mehrere Datensätze, die in eine Datensatzkette eingebunden werden sollen, ausgebildet. Wenn beispielsweise ein erster Transaktionspartner, dem die Zone z1 und die Rechnergruppe 4 zugeordnet ist, eine Transaktion an einen zweiten Transaktionspartner, dem die Zone z2 und die Rechnergruppe 4' zugeordnet ist, durchführen möchte, berechnet die Rechnergruppe 4 einen Datensatz, der Informationen über die durchzuführende Transaktion, insbesondere über die Transaktionsart und die Transaktionssumme enthält.

Der Zone z1 sind vorzugsweise mehrere Validierungseinheiten 5, 5' zugeordnet. Vorzugsweise sind der Zone z1 auch mehr als zwei Validierungseinheiten 5, 5' zugeordnet. Diese Validierungseinheiten 5, 5' sind, wie zuvor beschrieben, zur Prüfung der Datensätze hinsichtlich deren korrekter Bildung bzw. Vollständigkeit ausgebildet. Die Validierungseinheiten 5, 5' stehen beispielsweise hinsichtlich der Prüfungstätigkeit der Datensätze in Konkurrenz zueinander. Beispielsweise wird für die Validierungstätigkeit eine Entlohnung geboten, und lediglich diejenige Validierungseinheit, die eine Datensatzvalidierung vornimmt, wird für diese Validierungstätigkeit entlohnt.

Die zumindest eine weitere Validierungseinheit 5' der Zone z1 prüft die Validierungstätigkeit der Validierungseinheit 5 und bildet dabei eine Überprüfungssinstanz.

Nachdem durch die Validierungseinheit 5 ein in die Datensatzkette einzubindender Datensatz validiert wurde und diese Validierung durch zumindest eine weitere Validierungseinheit 5 auf Richtigkeit bzw. Vollständigkeit überprüft wurde, wird der Datensatz in die Datensatzkette eingebunden und die Datensatzkette wird in einer oder mehreren Rechen- und Kommunikationseinheiten 2 der Rechnergruppe 4 gespeichert.

Um einen dem zweiten Transaktionspartner mitzuteilen, dass die Transaktion erfolgreich durchgeführt wurde, erfolgt ein Informationsaustausch zwischen der Zone z1 und der Zone z2, insbesondere zwischen einer Validierungseinheit 5, 5' der Zone z1 und einer Validierungseinheit 5", 5"' der Zone z2. Dabei können eine oder mehrere Validierungseinheiten sowohl in Zone z1 als auch in Zone z2 aktiv sein und dort als Validatoren auftreten.

Anstelle der Übertragung von Informationen kann auch eine Übertragung eines Betrags eines Wertträgers bzw. Zahlungsmittels (beispielsweise in Form von Tokens) erfolgen.

Der Informationsaustausch bzw. die Übertragung eines Betrags eines Wertträgers bzw. Zahlungsmittels kann beispielsweise über eine Schnittstelleneinheit 9 erfolgen. Dies kann beispielsweise derart erfolgen, dass die Validierungseinheit 5 der Zone z1, die den Datensatz validiert hat, einer Validierungseinheit der Zone z2 mitteilt, dass die Einbindung des Datensatzes in die Datensatzkette und damit die Transaktion korrekt vollzogen wurde. Alternativ kann anstelle eines Informationsaustauschs über die Schnittstelleneinheit 9 auch eine Übertragung eines Betrags eines Wertträgers bzw. Zahlungsmittels an eine Validierungseinheit 5", 5"' der Zone z2 erfolgen. Weiterhin alternativ kann eine Validierungseinheit 5 die Durchführung der Transaktion garantieren.

Die Schnittstelleneinheit 9 kann zudem ein Interface zu einem Kryptowährungssystem (z.B. Bitcoin, Ethereum etc.) oder einem sonstigen Banktransfersystem bilden, so dass zwischen den Transaktionspartnern bzw. den diesen Transaktionspartnern zugeordneten Zonen z1, z2 eine Transaktion in einer Kryptowährung oder einer sonstigen Währung erfolgen kann. Die Schnittstelleneinheit 9 stellt dabei sicher, dass zwischen dem System 1 und jeglichen andern Transaktions- bzw. Handelssystemen ein technologieunabhängiger und auch Währungswechsel umfassender Austausch von Informationen erfolgen kann.

Das System 1 umfasst zudem vorzugsweise eine Kundenschnittstelle 7. Über diese Kundenschnittstelle 7 können Kunden beispielsweise Hardware-Ressourcen, insbesondere mehrere Rechen- und Kommunikationseinheiten 2 und Validierungseinheiten 5 allokieren. Zudem können über die Kundenschnittstelle 10 die Hardware-Ressourcen konfiguriert werden, beispielsweise gemäß kundenspezifischen Vorgaben. Beispielsweise kann über die Kundenschnittstelle 7 eine Software auf die Rechen- und Kommunikationseinheiten 2 aufgespielt werden oder eine auf den Rechen- und Kommunikationseinheiten 2 vorhandene Software kann konfiguriert werden.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrunde liegend Erfindungsgedanke verlassen wird.

### Bezugszeichenliste

- 1: System
- 2: Rechen- und Kommunikationseinheit
- 2.1: Prozessor
- 2.1.1: Prozessorbereich
- 2.2: Speichereinheit
- 2.2.1: Speicherbereich
- 2.3: Kommunikationsschnittstelle
- 3: Messaufnehmer
- 4,4': Rechnergruppe
- 5,5': Validierungseinheit
- 5", 5"': Validierungseinheit
- 6: gekapselter Bereich
- 7: Kundenschnittstelle
- 8: Zugriffskontrolleinheit
- 9: Schnittstelleneinheit

- z1, z2: Zone

## Patentansprüche

1. System zur Durchführung von Transaktionen zwischen zumindest einem ersten und zumindest einem zweiten Transaktionspartner umfassend
- mehrere Rechen- und Kommunikationseinheiten (2), die örtlich verteilt an mehreren Standorten vorgesehen sind, wobei jede Rechen- und Kommunikationseinheit (2) mit zumindest einem Messaufnehmer (3) gekoppelt ist, wobei die Rechen- und Kommunikationseinheiten (2) eine Rechnergruppe (4) zur Durchführung einer Transaktion bilden, wobei die Rechen- und Kommunikationseinheiten (2) einer Rechnergruppe (4) bei der Durchführung einer Transaktion jeweils zur Generierung eines Datensatzes ausgebildet sind, der Informationen hinsichtlich einer Transaktion enthält und zur Einbindung in eine Kette von kryptographisch miteinander verknüpften Datensätzen ausgebildet ist;
- zumindest eine Validierungseinheit (5), die zur Überprüfung der in die Kette von kryptographisch miteinander verknüpften Datensätzen einzubindenden Datensätze ausgebildet ist, wobei die Validierungseinheit (5) weiterhin dazu ausgebildet ist, einen Datensatz, der von einer Rechen- und Kommunikationseinheiten (2) der Rechnergruppe (4) generiert wurde, auszuwählen und in die Kette von kryptographisch miteinander verknüpften Datensätzen einzubinden.

2. System nach Anspruch 1, **dadurch gekennzeichnet, dass** die Transaktionspartner unterschiedlichen Zonen (z1, z2) zugeordnet sind, wobei jeder Zone (z1, z2) zumindest eine Validierungseinheit (5) zugeordnet ist und wobei vorzugsweise den Zonen (z1, z2) der Transaktionspartner unterschiedliche Validierungseinheiten (5) zugeordnet sind.

3. System nach Anspruch 1 oder 2, **dadurch gekennzeichnet, dass** die Transaktionspartner unterschiedlichen Zonen (z1, z2) zugeordnet sind, wobei jeder Zone (z1, z2) zumindest zwei Validierungseinheiten (5) zugeordnet sind, wobei eine erste Validierungseinheit (5) zur Überprüfung der in die Kette von kryptographisch miteinander verknüpften Datensätzen einzubindenden Datensätze ausgebildet ist und wobei die zumindest eine weitere Validierungseinheit (5) zur Kontrolle der ersten Validierungseinheit (5) ausgebildet ist.

4. System nach einem der vorhergehenden Ansprüche, **dadurch gekennzeichnet, dass** jede Rechen- und Kommunikationseinheit (2) jeweils einen gekapselten Bereich (6) aufweist, der entweder einen eigenständigen Prozessor und eine eigenständige Speichereinheit aufweist, oder dass dem gekapselten Bereich (5) eigenständige Prozessor- und Speicherbereiche (2.1.1, 2.2.1) zugewiesen sind.

5. System nach Anspruch 4, **dadurch gekennzeichnet, dass** der eigenständige Prozessor oder der eigenständige Prozessorbereich (2.1) zur Berechnung des Datensatzes konfiguriert ist.

6. System nach Anspruch 4 oder 5, **dadurch gekennzeichnet, dass** die eigenständige Speichereinheit oder der eigenständige Speicherbereich (2.2) zur Abspeicherung einer Kette von kryptographisch miteinander verknüpften Datensätzen ausgebildet ist.

7. System nach einem der vorhergehenden Ansprüche, **dadurch gekennzeichnet, dass** die zumindest eine Validierungseinheit (5) aufgrund eines eingesetzten Betrags eines Wertträgers oder eines Zahlungsmittels als Validierungseinheit (5) autorisiert ist.

8. System nach einem der vorhergehenden Ansprüche, **dadurch gekennzeichnet, dass** die Rechen- und Kommunikationseinheiten (2) zur Durchführung der Transaktionen zwischen zumindest einem ersten und zumindest einem zweiten Transaktionspartner über eine Schnittstelle (7) frei konfigurierbar sind.

9. System nach einem der vorhergehenden Ansprüche, **dadurch gekennzeichnet, dass** jede Rechen- und Kommunikationseinheit (2) zur parallelen Generierung eines Datensatzes ausgebildet ist und dass die Validierungseinheit (5) basierend auf einem Konsensmechanismus unter Berücksichtigung der parallel generierten Datensätze dazu konfiguriert ist, zu entscheiden, welches Datenpaket in die Kette von kryptographisch miteinander verknüpften Datensätzen einzubinden ist.

10. Verfahren zur Durchführung von Transaktionen zwischen zumindest einem ersten und zumindest einem zweiten Transaktionspartner mittels einem System (1), das mehrere Rechen- und Kommunikationseinheiten (2), die örtlich verteilt an mehreren Standorten vorgesehen sind, umfasst, wobei jede Rechen- und Kommunikationseinheit (2) mit zumindest einem Messaufnehmer (3) gekoppelt ist und wobei die Rechen- und Kommunikationseinheiten (2) eine Rechnergruppe (4) zur Durchführung einer Transaktion bilden, wobei das Verfahren folgende Schritte umfasst:
- Generierung jeweils zumindest eines Datensatzes durch die Rechen- und Kommunikationseinheiten (2) der Rechnergruppe (4) bei der Durchführung einer Transaktion, wobei der Datensatz Informationen hinsichtlich der Transaktion enthält und zur Einbindung in eine Kette von kryptographisch miteinander verknüpften Datensätzen ausgebildet ist;
- Überprüfung des in die Kette von kryptographisch miteinander verknüpften Datensätzen einzubindenden Datensatzes durch zumindest eine Validierungseinheit (5);
- Auswählen eines Datensatzes, der von einer Rechen- und Kommunikationseinheit (2) der Rechnergruppe (4) generiert wurde, und Einbinden des ausgewählten Datensatzes in die Kette von kryptographisch miteinander verknüpften Datensätzen.

11. Verfahren nach Anspruch 10, **dadurch gekennzeichnet, dass** der Schritt des Überprüfens des in die Kette von kryptographisch miteinander verknüpften Datensätzen einzubindenden Datensatzes beinhaltet, dass die Validierungseinheit (5) basierend auf einem Konsensmechanismus unter Berücksichtigung der parallel generierten Datensätze entscheidet, welches Datenpaket in die Kette von kryptographisch miteinander verknüpften Datensätzen einzubinden ist.

12. Verfahren nach Anspruch 10 oder 11, **dadurch gekennzeichnet, dass** die Validierungseinheit (5) durch zumindest eine weitere Validierungseinheit (5) überprüft wird und bei fehlerhafter Validierung einen eingesetzten Betrag eines Wertträgers oder eines Zahlungsmittels, der für die Autorisierung als Validierungseinheit (5) eingesetzt wurde, verliert.

13. Verfahren nach einem der Ansprüche 10 bis 12, **dadurch gekennzeichnet, dass** das Einbinden des ausgewählten Datensatzes in die Kette von kryptographisch miteinander verknüpften Datensätzen das Generieren eines kryptographisch gesicherten Hash-Werts zumindest eines Teils des in der Kette von Datensätzen unmittelbar davor befindlichen Datensatzes, eines Zeitstempels und Informationen zur durchgeführten Transaktion umfasst.

14. Verfahren nach einem der Ansprüche 10 bis 13, **dadurch gekennzeichnet, dass** die Rechen- und Kommunikationseinheit (2) jeweils einen gekapselten Bereich (6) aufweist, der entweder einen eigenständigen Prozessor und eine eigenständige Speichereinheit aufweist, oder dass dem gekapselten Bereich (6) eigenständige Prozessor- und Speicherbereiche (2.1.1, 2.2.1) zugewiesen werden und dass in der eigenständigen Speichereinheit oder dem eigenständigen Speicherbereich (2.2) der Rechen- und Kommunikationseinheit (2) eine Kette von kryptographisch miteinander verknüpften Datensätzen abgespeichert wird.

15. Rechen- und Kommunikationseinheit zur Berechnung eines Datensatzes bezüglich einer durchgeführten Transaktion umfassend zumindest einen Prozessor (2.1) und zumindest eine Speichereinheit (2.2), wobei die Rechen- und Kommunikationseinheit (2) ein Gateway für einen Messaufnehmer (3) bildet und zur Übertragung von vom Messaufnehmer aufgenommenen Messwerten oder davon abgeleiteten Informationen an eine Administratoreinheit ausgebildet ist, wobei die Rechen- und Kommunikationseinheit (2) zudem einen gekapselten Bereich (6) umfasst, der entweder einen eigenständigen Prozessor und eine eigenständige Speichereinheit aufweist, oder dass dem gekapselten Bereich (6) eigenständige Prozessor- und Speicherbereiche (2.1.1, 2.2.1) zugewiesen sind und wobei der gekapselte Bereich (6) zur Berechnung eines Datensatzes ausgebildet ist, der zur Einbindung in eine Kette von kryptographisch miteinander verknüpften Datensätzen vorgesehen ist, wobei der Datensatz einen kryptographisch gesicherten Hash-Werts zumindest eines Teils des in der Kette von Datensätzen unmittelbar davor befindlichen Datensatzes und Informationen zur durchgeführten Transaktion enthält.
